# EUROPÄISCHE PATENTSCHRIFT

(11) **EP 1 459 944 B1**
(45) Veröffentlichungstag und Bekanntmachung des Hinweises auf die Patenterteilung: **03.05.2006**
(21) Anmeldenummer: 04004548.6
(22) Anmeldetag: 27.02.2004
(51) Int. Cl.: B60R 21/20

(54) **Gassackmodul für ein Kraftfahrzeuglenkrad mit schwingfähig gelagertem Gasgenerator**
Air bag module with yieldably mounted gas generator
Module de sac gonflable avec générateur de gaz oscillant

(30) Priorität: 21.03.2003 DE 20304551 U
(43) Veröffentlichungstag der Anmeldung: 22.09.2004
(60) Teilanmeldung: 05019455.4
(73) Patentinhaber: TRW Automotive Safety Systems GmbH, 63743 Aschaffenburg (DE)
(72) Erfinder: Lorenz, Christian, 63849 Leidersbach (DE); Helmstetter, Matthias, 63743 Aschaffenburg (DE)
(74) Vertreter: Strass, Jürgen

(56) Entgegenhaltungen:
- EP-A- 1 065 110
- DE-A- 10 002 480
- DE-A- 10 110 912
- DE-A- 19 840 998
- US-A- 5 730 459

## Beschreibung

Die Erfindung betrifft ein Gassackmodul nach dem Oberbegriff des Anspruchs 1.

Gassackmodule, bei denen zur Erhöhung des Komforts und der Fahrsicherheit der Gasgenerator als Schwingungstilger eingesetzt wird, um die über die starre Lenksäule auf das Lenkrad übertragenen Fahrzeugschwingungen zu dämpfen, sind z.B. aus der EP-A-1 026 050 bekannt. Darin wird ein Gassackmodul vorgeschlagen, bei dem ein parallel zur Lenkradachse ausgerichteter Montagezylinder aus elastischem Werkstoff mit seinen freien Rändern einerseits mit einem ringförmigen Montageblech und andererseits mit einem Montageflansch des Gasgenerators verbunden ist. Ein Rand des Montagezylinders kann für eine Abdichtung des Gassackinnenraums gegen die Umgebung benutzt werden, wenn er in Anlage mit einem Hilfsflansch kommt. Dadurch wird verhindert, daß Verunreinigungen in den Gassack eindringen und im Aktivierungsfall Füllgase aus dem Gassack austreten.

In der WO 00/15470 ist ein Gassackmodul für ein Kraftfahrzeuglenkrad gezeigt, bei dem ein elastisches Element, das an einem mit dem Gassackmodul fest verbundenen Bauteil befestigt ist, eine Dichtlippe aufweist. Nach Zündung des Gasgenerators legt sich die Dichtlippe an einen Flansch des Gasgenerators an, um den Gassackinnenraum abzudichten.

Aus der DE 198 40 998 A1 ist ein Gassackmodul mit den Merkmalen des Oberbegriffs des Anspruchs 1 bekannt. Ein umlaufendes Dichtelement, das mit einem freien Rand indirekt am Gasgenerator befestigt ist, wird beim Befüllen des Gassacks so ausgelenkt, daß es direkt in Anlage mit einer Abstützfläche kommt.

Mit der Erfindung soll die Abdichtung des Gassackinnenraums im Aktivierungsfall verbessert werden, insbesondere im Hinblick auf die Dichtwirkung und eine Entlastung der Dichtung.

Bei einem Gassackmodul nach dem Oberbegriff des Anspruchs 1 wird dies erfindungsgemäß dadurch erreicht, daß das Dichtelement mit seinem anderen freien Rand direkt oder indirekt am Generatorträger befestigt ist und ein vor dem Befüllen des Gassacks freier mittlerer Abschnitt des Dichtelements durch den beim Befallen des Gassacks im Gassackinneren entstehenden Druck so ausgelenkt wird, daß er direkt oder indirekt in Anlage mit einer Abstützfläche kommt. Durch die Abstützfläche wird das mit Druck beaufschlagte Dichtelement entlastet und ist gegen ein Platzen gesichert. Das Dichtelement kann dementsprechend dünnwandiger ausgeführt werden, wodurch die Schwingfähigkeit des Gasgenerators verbessert wird.

Vorteilhafte Ausgestaltungen der bevorzugten Ausführungsformen der Erfindung sind in den Unteransprüchen angegeben.

Aus der nachfolgenden Beschreibung und aus den beigefügten Zeichnungen, auf die Bezug genommen wird, ergeben sich weitere Einzelheiten der Erfindung. In den Zeichnungen zeigen:
- Figur 1a einen Halbschnitt eines erfindungsgemäßen Gassackmoduls nach einer ersten Ausführungsform im nicht ausgelösten Zustand;
- Figur 1b einen Halbschnitt des Gassackmoduls gemäß Figur 1 im ausgelösten Zustand;
- Figur 2 einen Halbschnitt eines erfindungsgemäßen Gassackmoduls nach einer zweiten Ausführungsform im nicht ausgelösten Zustand;
- Figur 3a einen Halbschnitt eines erfindungsgemäßen Gassackmoduls nach einer vierten Ausfiihrungsform im nicht ausgelösten Zustand;
- Figur 3b eine Vergrößerung des Ausschnitts X aus Figur 4a; und
- Figur 4 einen Ausschnitt eines erfindungsgemäßen Gassackmoduls nach einer fünften Ausführungsform in teilweise geschnittener Ansicht.

Die in Figur 1a dargestellte Ausführungsform des erfindungsgemäßen Gassackmoduls umfaßt einen Gassack 10, einen Gasgenerator 12, eine Abdeckkappe 14, einen Generatorträger 16 sowie eine Schraubverbindung 18, mittels der der die Eintrittsöffnung umgebende Rand des Gassacks 10 mit dem Generatorträger 16 verspannt ist. Der Gasgenerator 12 ist relativ zu den übrigen Bauteilen des Gassackmoduls schwingfähig gelagert und kann somit zur Dämpfung unerwünschter Vibrationen benutzt werden.

Der Gasgenerator 12 hat einen bezogen auf die Mittelachse A des Gassackmoduls umlaufenden Montageflansch 20, dem ein schräg abgewinkelter, umlaufender Abschnitt 22 des Generatorträgers 16 gegenüberliegt. Ein zylinderartiges Dichtelement 24 aus einem elastischen Werkstoff ist mit seinen freien Rändern einerseits mit dem Montageflansch 20 des Gasgenerators 12 und andererseits über die Schraubverbindung 18 mit dem Generatorträger 16 fest verbunden. Mit dem umlaufenden Dichtelement 24 wird eine Abdichtung des Gassackinnenraums erreicht, insbesondere zwischen dem abgewinkelten Abschnitt 22 des Generatorträgers 16 und dem Montageflansch 20 des Gasgenerators 12. Das Dichtelement 24 ist zwischen seinen freien Rändern in axialer Richtung "gestaucht", so daß es eine im Querschnitt wellenartige Kontur aufweist. Dem Gasgenerator 12, der teilweise durch das Dichtelement 24 gelagert ist, bleibt dadurch genügend Spiel, so daß seine Funktion als Schwingungstilger nicht beeinflußt ist.

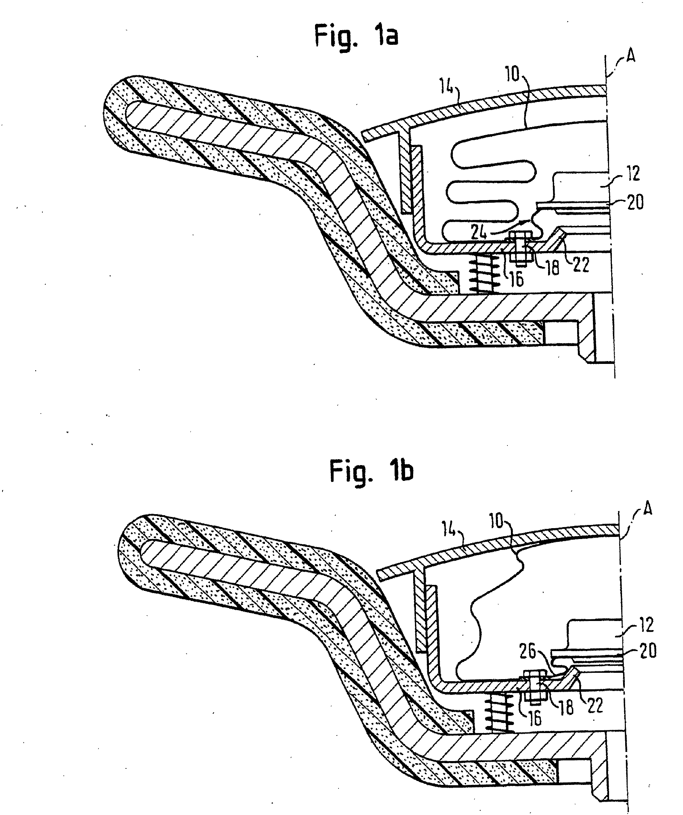

Im Aktivierungsfall, der in Figur 1b dargestellt ist, tritt Gas aus dem Gasgenerator 12 aus, um den Gassack 10 zu füllen. Durch den dabei entstehenden Druck im Gassackinnenraum wird ein mittlerer Abschnitt 26 des Dichtelements 24 an den abgewinkelten Abschnitt 22 des Generatorträgers 16 gepreßt. Der abgewinkelte Abschnitt 22 nimmt einen Großteil des Drucks auf und entlastet somit das Dichtelement 24.

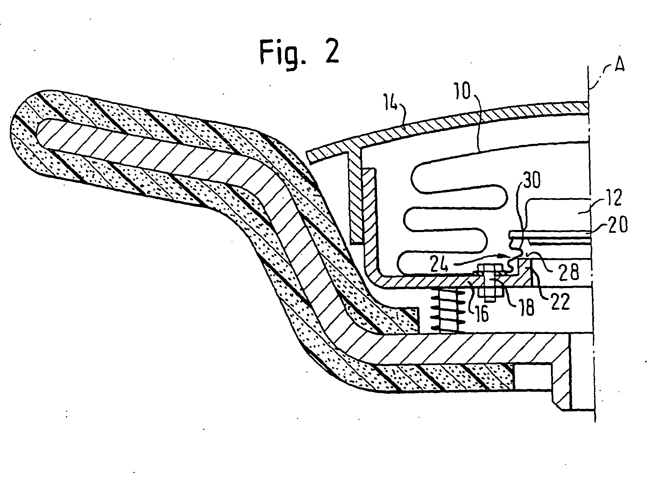

Bei der in Figur 2 gezeigten Ausführungsform sind die Bauteile, die denen der Ausführungsform der Figuren 1a und 1b entsprechen, mit den gleichen Bezugszeichen versehen. Im Unterschied zur zuvor beschriebenen Ausführungsform erstreckt sich bei der Ausführungsform der Figur 2 der abgewinkelte Abschnitt 22 des Gasgeneratorträgers 16 nicht schräg, sondern rechtwinklig vom Generatorträger 16 weg, und das dem Gasgenerator 12 zugewandte Ende des Abschnitts 22 bildet eine Abstützfläche 28.

Im Aktivierungsfall werden der Gasgenerator 12 und der Wellenabschnitt 30 durch den Druck im Gassackinneren nach unten bzw. zur Mittelachse A gedrückte.

Das Dichtelement 24 ist so ausgebildet und angeordnet daß durch den sich aufbauenden Druck ein Wellenabschnitt 30 des Dichtelements 24 zwischen Abstützfläche 28 und Montageflansch 20 gedrückt wird, und einen doppellagigen Dichtabschnitt bildet. Die Dichtwirkung und die Stabilität des Dichtelements 24 werden dadurch verstärkt.

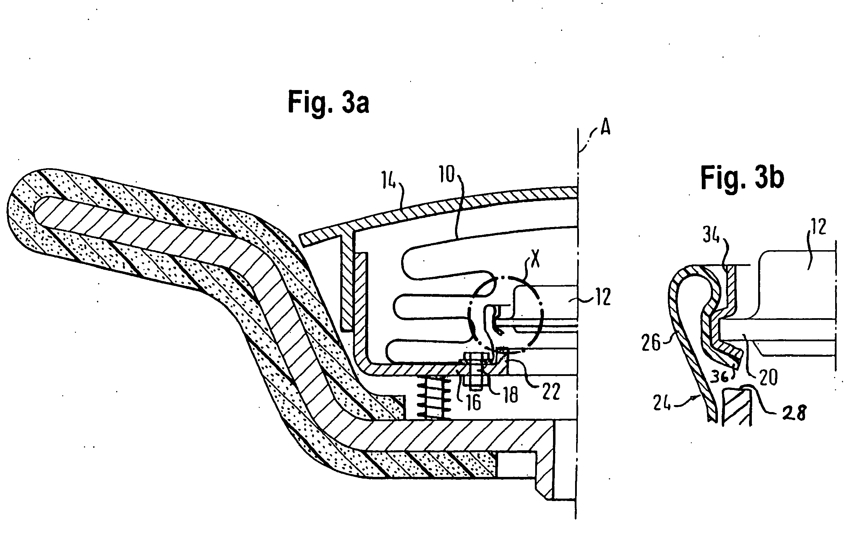

Bei der in Figur 3a gezeigten Ausführungsform erfolgt die Befestigung des oberen Rands des Dichtelements 24 über ein am Montageflansch 20 angebrachtes Verbundelement 34, wie aus Figur 3b deutlicher hervorgeht. Das Dichtelement 24 ist so angeordnet, daß der am Verbundelement 34 befestigte Randabschnitt einmal so umgelegt ist, daß er mit der Seite am Verbundelement 34 anliegt, die im Auslösefall mit Druck beaufschlagt wird. Somit liegt im Bereich des Montageflanschs 20 ein mittlerer Abschnitt 26 des Dichtelements 24 vor, der im Aktivierungsfall durch den Druck im Gassackinneren an den am Verbundelement 34 befestigten Randabschnitt gedrückt wird und dadurch die Dichtwirkung des Dichtelements 24 verbessert. Der mittlere Abschnitt 26 und der Randabschnitt des Dichtelements 24 stützen sich dabei am Verbundelement 34 ab, das dadurch für eine Entlastung des Dichtelements 24 sorgt. Außerdem wird der Gasgenerator 12 durch den erzeugten Druck nach unten bewegt, so daß ein Endabschnitt 36 des Dichtelements 24 auf einer am Generatorträger 16 gebildeten Abstützfläche 28 zu liegen kommt und so für eine umlaufende Abdichtung sorgt.

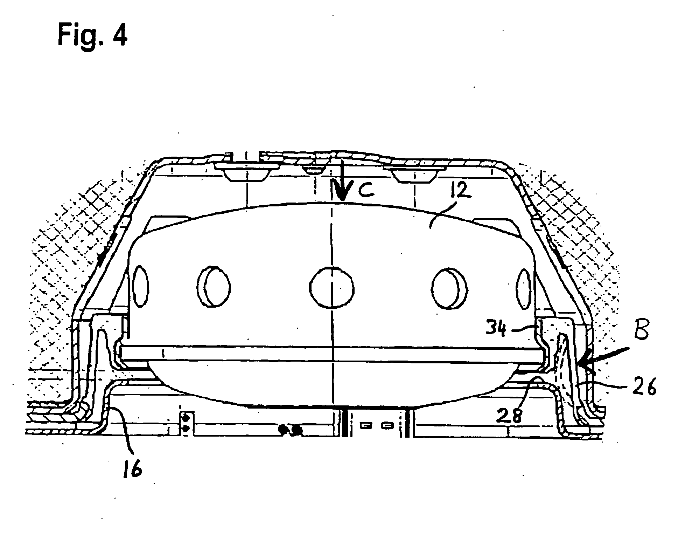

Die in Figur 4 gezeigte Ausführungsform entspricht bis auf einige kleine Unterschiede in der Ausgestaltung einzelner Bauteile im wesentlichen der zuvor beschriebenen Ausführungsform. Aus Figur 4 geht deutlich hervor, daß der im Auslösefall vom Gasgenerator 12 erzeugte Druck sowohl in seitlicher Richtung, angedeutet durch den Pfeil B, als auch in Richtung des Pfeils C wirkt. Wie durch die gestrichelten Linien angedeutet, sorgt einerseits der seitliche Druck dafür, daß der mittlere Abschnitt 26 des umlaufenden Dichtelements 24 in Anlage sowohl mit dem umgelegten Randabschnitt des Dichtelements 24 als auch mit einem Oberflächenabschnitt des Generatorträgers 16 kommt, während andererseits sich der Gasgenerator 12 aufgrund des Drucks in Richtung des Pfeils C bewegt, so daß der Endabschnitt 36 des Dichtelements 24 auf der Abstützfläche 28 des Generatorträgers 16 zu liegen kommt.

Die verschiedenen, anhand der einzelnen Ausführungsformen beschriebenen Maßnahmen zur Verbesserung der Abdichtung des Gassackinnenraums können selbstverständlich auch untereinander kombiniert werden.

## Patentansprüche

1. Gassackmodul für ein Kraftfahrzeuglenkrad, mit einem Gassack (10), einem schwingfähig gelagerten Gasgenerator (12), einem Generatorträger (16), Mitteln (18) zum Verspannen des Gassacks (10) am Generatorträger (16) sowie einem elastisch verformbaren, bezogen auf die Mittelachse (A) des Gassackmoduls umlaufenden Dichtelement (24), wobei das Dichtelement (24) mit einem freien Rand direkt oder indirekt am Gasgenerator (12) befestigt ist, **dadurch gekennzeichnet, daß** das Dichtelement (24) mit seinem anderen freien Rand direkt oder indirekt am Generatorträger (16) befestigt ist und ein vor dem Befüllen des Gassacks (10) freier mittlerer Abschnitt (26) des Dichtelements (24) durch den beim Befüllen des Gassacks (10) im Gassackinneren entstehenden Druck so ausgelenkt wird, daß er direkt oder indirekt in Anlage mit einer Abstützfläche (22; 28) kommt.

2. Gassackmodul nach Anspruch 1, **dadurch gekennzeichnet, daß** der Gasgenerator (12) zumindest teilweise durch das Dichtelement (24) im Gassackmodul gelagert ist.

3. Gassackmodul nach Anspruch 1 oder 2, **dadurch gekennzeichnet, daß** das Dichtelement (24) zylinderartig ausgebildet ist und in axialer Richtung gestaucht ist.

4. Gassackmodul nach einem der vorhergehenden Ansprüche, **dadurch gekennzeichnet, daß** ein freier Rand des Dichtelements (24) an einem Montageflansch (20) des Gasgenerators (12) befestigt ist.

5. Gassackmodul nach einem der vorhergehenden Ansprüche, **dadurch gekennzeichnet, daß** die Abstützfläche (22; 28) an einem Abschnitt des Generatorträgers (16) gebildet ist.

6. Gassackmodul nach einem der vorhergehenden Ansprüche, **dadurch gekennzeichnet, daß** der mittlere Abschnitt (26) des Dichtelements (24) wellenförmig ausgebildet ist und zwischen dem Gasgenerator (12) und die Abstützfläche (22; 28) ragt.

7. Gassackmodul nach einem der Ansprüche 1 bis 4, **dadurch gekennzeichnet, daß** die Abstützfläche an einem am Gasgenerator (12) angebrachten Verbundelement (34) gebildet ist.

## Claims

1. A gas bag module for a motor vehicle steering wheel, comprising a gas bag (10), a gas generator (12) mounted so as to be capable of oscillating, a generator carrier (16), means (18) for bracing the gas bag (10) on the generator carrier (16), and an elastically deformable sealing element (24) that is encircling in relation to the central axis (A) of the gas bag module, a free edge of the sealing element (24) being fastened directly or indirectly to the gas generator (12), **characterized in that** the other free edge of the sealing element (24) is fastened directly or indirectly to the generator carrier (16), and that a middle section (26) of the sealing element (24) which is free before filling of the gas bag (10) is deflected by the pressure developing in the interior of the gas bag during filling of the gas bag (10) such that the middle section (26) comes directly or indirectly in abutment with a support surface (22; 28).

2. The gas bag module according to Claim 1, **characterized in that** the gas generator (12) is supported in the gas bag module at least partially by the sealing element (24).

3. The gas bag module according to Claim 1 or 2, **characterized in that** the sealing element (24) is constructed like a cylinder and is upset in the axial direction.

4. The gas bag module according to any of the preceding claims, **characterized in that** a free edge of the sealing element (24) is fastened to a mounting flange (20) of the gas generator (12).

5. The gas bag module according to any of the preceding claims, **characterized in that** the support surface (22; 28) is formed on a section of the generator carrier (16).

6. The gas bag module according to any of the preceding claims, **characterized in that** the middle section (26) of the sealing element (24) is constructed in a wave-form and projects between the gas generator (12) and the support surface (22; 28).

7. The gas bag module according to any of Claims 1 to 4, **characterized in that** the support surface is formed on a composite element (34) fitted to the gas generator (12).

## Revendications

1. Module de coussin à gaz pour un volant de direction de véhicule, comportant un coussin à gaz (10), un générateur de gaz (12) monté de manière à pouvoir osciller, un support de générateur (16), des moyens (18) pour tendre le coussin à gaz (10) sur le support de générateur (16), ainsi qu'un élément d'étanchéité (24) élastiquement déformable, périphérique par rapport à l'axe médian (A) du module de coussin à gaz, l'élément d'étanchéité (24) étant fixé avec un bord libre directement ou indirectement sur le générateur de gaz (12), **caractérisé en ce que** l'élément d'étanchéité (24) est fixé avec son autre bord libre directement ou indirectement sur le support de générateur (16), et **en ce qu'**un tronçon (26) médian de l'élément d'étanchéité (24), qui est libre avant le remplissage du coussin à gaz (10), est dévié par la pression produite à l'intérieur du coussin à gaz lors du remplissage du coussin à gaz (10) de telle sorte qu'il vient directement ou indirectement en appui avec une surface d'appui (22 ; 28).

2. Module de coussin à gaz selon la revendication 1, **caractérisé en ce que** le générateur de gaz (12) est logé dans le module de coussin à gaz au moins partiellement par l'élément d'étanchéité (24).

3. Module de coussin à gaz selon la revendication 1 ou 2, **caractérisé en ce que** l'élément d'étanchéité (24) est réalisé en forme de cylindre et est aplati en direction axiale.

4. Module de coussin à gaz selon l'une des revendications précédentes, **caractérisé en ce qu'**un bord libre de l'élément d'étanchéité (24) est fixé sur une bride de montage (20) du générateur de gaz (12).

5. Module de coussin à gaz selon l'une des revendications précédentes, **caractérisé en ce que** la surface d'appui (22 ; 28) est formée sur un tronçon du support de générateur (16).

6. Module de coussin à gaz selon l'une des revendications précédentes, **caractérisé en ce que** le tronçon médian (26) de l'élément d'étanchéité (24) est réalisé en forme ondulée et fait saillie entre le générateur de gaz (12) et la surface d'appui (22; 28).

7. Module de coussin à gaz selon l'une des revendications 1 à 4, **caractérisé en ce que** la surface d'appui est formée sur un élément composite (34) monté sur le générateur de gaz (12).
